## Europäisches Patentamt
## European Patent Office
## Office européen des brevets

(11) Numéro de publication : **0 244 316 B1**

## (12) FASCICULE DE BREVET EUROPEEN

(45) Date de publication du fascicule du brevet :
**06.03.91 Bulletin 91/10**

(51) Int. Cl.$^5$ : **H04L 25/49, H04L 7/02**

(21) Numéro de dépôt : **87400966.5**

(22) Date de dépôt : **27.04.87**

(54) Dispositif de décodage pour code CMI.

(30) Priorité : **28.04.86 FR 8606096**

(43) Date de publication de la demande :
**04.11.87 Bulletin 87/45**

(45) Mention de la délivrance du brevet :
**06.03.91 Bulletin 91/10**

(84) Etats contractants désignés :
**DE GB IT**

(56) Documents cités :
**DE-A- 3 310 713**
**FR-A- 2 495 408**
**US-A- 3 627 907**
**US-A- 3 953 673**
**US-A- 3 992 581**
**US-A- 4 321 483**

(73) Titulaire : **SAT Société Anonyme de Télécommunications**
**41, rue Cantagrel**
**F-75631 Paris Cedex 13 (FR)**

(72) Inventeur : **Arnaune, Jean-Pierre Henri Fernand**
**14 Rue Pierre Curie**
**F-91210 Draveil (FR)**

(74) Mandataire : **Bloch, Gérard et al**
**2, square de l'Avenue du Bois**
**F-75116 Paris (FR)**

## Description

La présente invention a pour objet un dispositif de décodage, recevant une suite codée de bits et délivrant une suite décodée de bits, ladite suite codée ayant été obtenue par codage d'une suite de bits à coder en convertissant chaque bit à coder en deux bits successifs, un bit à coder ayant l'une ou l'autre de deux valeurs qui sont associées, l'une à une seule des paires de bits codés différents, l'autre alternativement à l'une et l'autre des deux paires de bits codés identiques, le dispositif de décodage comprenant des moyens de récupération d'horloge, commandés par ladite suite codée et délivrant un signal d'horloge de période égale à la durée d'une paire de bits de ladite suite codée, et des moyens de décodage des paires, recevant ladite suite codée et ledit signal d'horloge, et délivrant ladite suite décodée.

Un codage du type ci-dessus, dans lequel un bit à coder de valeur 0 est converti en la paire de bits 01, par exemple, et un bit à coder de valeur 1 est converti alternativement en la paire 00 et en la paire 11 est appelé usuellement codage CMI (Coded Mark Inversion).

Un tel codage a pour avantage les propriétés spectrales et la redondance du signal codé, qui facilitent sa transmission, ainsi que la détection d'erreurs lors de cette transmission.

On connaît déjà un dispositif du type ci-dessus, par le brevet français N° 2 024 873. Dans ce dispositif, les moyens de récupération d'horloge sont tels que le signal d'horloge se cale, par rapport à la suite codée reçue, de façon à ce que ses fronts de montée soient en phase, ou en opposition de phase avec les transitions entre paires de la suite codée. On peut considérer comme aléatoires les facteurs qui font que le signal d'horloge se cale en phase ou en opposition de phase. Il en résulte qu'on a une chance sur deux pour que les moyens de décodage, commandés par le signal d'horloge, décodent les vraies paires de bits du signal codé et restituent en sortie un signal décodé correct. Dans le cas contraire, les moyens de décodage décodent de fausses paires et le signal de sortie est incorrect. Pour lever cette ambiguïté, les moyens de décodage du brevet précité sont agencés pour détecter la paire de bits codés différents non utilisée, ou paire interdite, ici la paire 10, et pour agir sur les moyens de récupération d'horloge afin de décaler le signal d'horloge d'une demi-période en cas de détection de la paire interdite.

Ce dispositif présente, d'une part, l'inconvénient de nécessiter des moyens de détection agencés pour détecter la paire interdite, et, d'autre part, l'inconvénient de délivrer un signal de sortie incorrect tant que la paire interdite n'a pas été détectée, dans le cas où le signal d'horloge est mal calé au départ.

On connaît aussi des dispositifs du type ci-dessus, par les demandes française No. FR-A-2 495 408 et allemande No. DE-A-3 310 713.

Dans ces dispositifs, il est prévu des moyens pour élaborer, à partir de la suite codée, un signal plus riche en transitions que cette suite codée, c'est-à-dire dont la composante fréquentielle à la fréquence d'horloge est plus importante que celle de la suite codée. Ce signal riche en transitions, est appliqué à un circuit de récupération d'horloge qui comprend un simple filtre passe bande centré sur la fréquence d'horloge. Dans ces dispositifs, du fait que le calage temporel du signal en sortie du filtre, à la fréquence d'horloge, est quelconque par rapport à la suite codée, il est nécessaire de prévoir un circuit retardateur réglé manuellement pour assurer un fonctionnement satisfaisant des moyens de décodage des paires.

La présente invention vise à pallier les inconvénients précédents en procurant un dispositif de décodage ne nécessitant aucun réglage manuel, et délivrant toujours un signal décodé correct.

A cet effet, elle a pour objet un dispositif de décodage du type ci-dessus caractérisé par le fait qu'il est prévu des moyens agencés pour détecter des transitions entre paires de ladite suite codée et synchroniser lesdits moyens de récupération d'horloge.

Grâce au dispositif de l'invention, il n'est plus nécessaire de mettre en oeuvre la détection de la paire interdite et l'établissement, en sortie, du signal décodé correct est immédiate.

Avantageusement, lesdites transitions détectées sont identiques à la transition de l'autre desdites paires de bits codés différents.

En effet, comme l'autre desdites paires de bits codés différents, ici la paire 10, est interdite, une transition identique à celle de la paire interdite correspond nécessairement à une transition entre paires de la suite codée, aucune des paires autorisées, ici les paires 00, 11 et 01, ne présentant une transition de ce type.

Avantageusement encore, lesdits moyens de récupération d'horloge comprennent un comparateur de décalage temporel, et un oscillateur commandable, délivrant un signal de sortie, agencés pour former une boucle d'asservissement du décalage temporel entre chaque dite transition détectée et le flanc de montée suivant dudit signal de sortie dudit oscillateur.

Dans la forme de réalisation préférée du dispositif de l'invention, lesdits moyens de récupération d'horloge comprennent aussi un diviseur de fréquence, recevant ledit signal de sortie de l'oscillateur et délivrant ledit signal d'horloge, ledit diviseur de fréquence étant mis en phase par lesdits moyens pour détecter

EP 0 244 316 B1

les transitions.

Dans ce cas, les performances de la boucle d'asservissement sont améliorées.

La présente invention sera mieux comprise à l'aide de la description suivante de la forme de réalisation préférée du dispositif de décodage de l'invention, faite en se référant aux dessins annexés, sur lesquels :

- la figure 1 représente un schéma par blocs d'un dispositif de décodage,
- la figure 2 représente un diagramme temporel de signaux du dispositif de la figure 1,
- la figure 3 représente un schéma détaillé du circuit détecteur de transitions du dispositif de la figure 1,
- la figure 4 représente un schéma du circuit de récupération d'horloge du dispositif de la figure 1,
- la figure 5 représente un schéma d'une variante de réalisation du circuit de récupération d'horloge du dispositif de la figure 1,
- la figure 6 représente un diagramme temporel des signaux à l'entrée et à la sortie du circuit de récupération d'horloge de la figure 4 ou de la figure 5,
- la figure 7 représente un schéma détaillé du comparateur de décalage temporel du circuit de récupération d'horloge de la figure 4,
- la figure 8 représente un diagramme temporel des signaux du comparateur de décalage temporel de la figure 7,
- la figure 9 représente un schéma détaillé du circuit diviseur du circuit de récupération d'horloge de la figure 4,
- la figure 10 représente un diagramme temporel des signaux du circuit diviseur de la figure 9,
- la figure 11 représente un schéma détaillé du circuit de décodage du dispositif de la figure 1, et,
- la figure 12 représente un diagramme temporel des signaux du circuit de décodage de la figure 11.

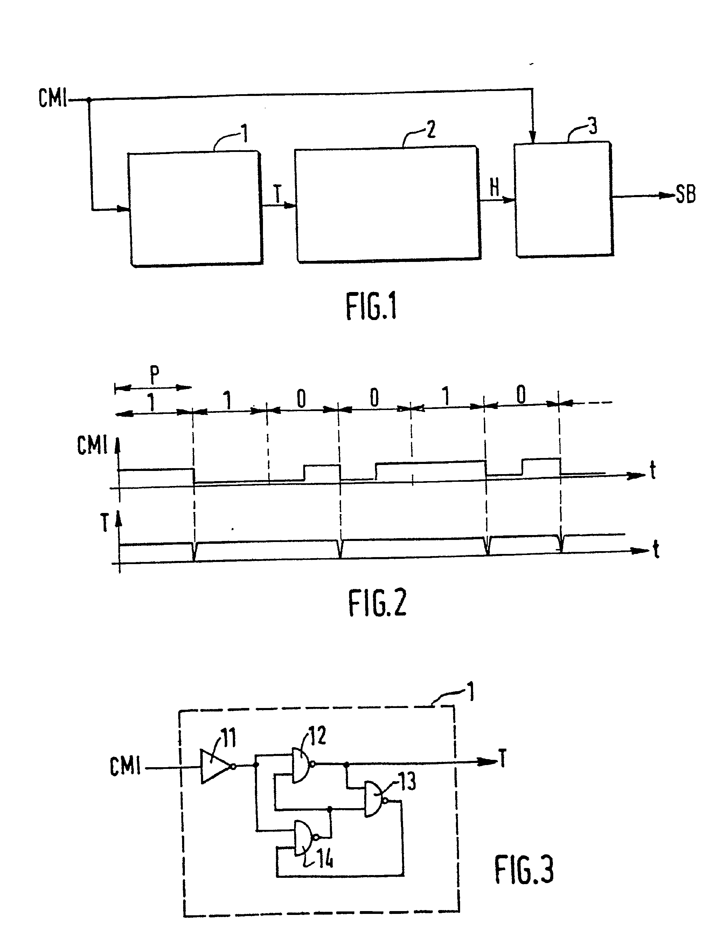

En se référant à la figure 1, un dispositif de décodage reçoit une suite codée de bits CMI et délivre une suite décodée de bits SB.

La suite codée CMI a été obtenue, à l'aide de moyens analogues à ceux décrits dans le brevet français N° 2 024 873, par codage d'une suite à coder en convertissant chaque bit à coder en deux bits successifs, c'est-à-dire une paire de bits. Le débit de la suite codée CMI est donc double du débit de la suite à coder.

La loi de codage est ici telle qu'un bit à coder de valeur 0 est converti en la paire de bits 01, et un bit à coder de valeur 1 est converti alternativement en la paire 00 et la paire 11. La paire 10, non utilisée, est appelée paire interdite. La loi de codage est résumée dans le tableau suivant :

| bit à coder | paire de bits codés |
|---|---|
| 0 | 01 |
| 1 | 00 et 11 alternativement |

La partie supérieure de la figure 2 fournit un exemple de codage : la suite à coder est représentée par une suite de valeur 0 ou 1 de durée P, et la suite codée est représentée par le diagramme temporel du signal CMI, la durée d'une paire de bits codés étant égale à P.

Le spectre et la redondance du signal CMI le rendent moins sensible aux perturbations de transmission. Un tel signal est donc en général utilisé pour transmettre des informations entre un émetteur et un récepteur. Le dispositif de décodage objet de l'invention fait donc alors partie du récepteur, et il a pour fonction de délivrer, à partir du signal codé CMI reçu, le signal décodé SB qui doit donc être identique, à un retard près, au signal à coder d'origine.

Le dispositif de décodage comprend, montés en cascade, un circuit 1 détecteur de transitions, un circuit 2 de récupération d'horloge et un circuit de décodage 3.

Le circuit 1 détecteur de transitions reçoit le signal CMI et délivre un signal T au circuit 2 de récupération d'horloge. Celui-ci délivre un signal H au circuit de décodage 3 qui, recevant de plus le signal CMI, délivre en sortie le signal décodé SB.

3

EP 0 244 316 B1

Avant de décrire de façon détaillée la constitution de chacun des blocs 1, 2 et 3, abordons en le fonctionnement.

Comme le montre la figure 2, le signal T est un signal qui est toujours au niveau haut, sauf pendant les transitions négatives, de 1 vers 0, du signal CMI, c'est-à-dire ici, les transitions identiques à celles de la paire interdite. Or, le codage est tel qu'une transition de ce type ne peut coïncider qu'avec une transition entre deux paires de bits de la suite codée CMI, correspondant chacune à un bit à coder d'origine. En effet, un bit à coder de valeur 0 donne naissance à une paire 01 à transition positive, de 0 vers 1, et un bit à coder de valeur 1 donne naissance à une paire 00 ou 11 sans aucune transition. Ainsi les brèves impulsions au niveau bas du signal T correspondent nécessairement chacune à une transition entre paires. Naturellement, toutes les transitions entre paires, par contre, ne donnent pas naissance à une impulsion au niveau bas du signal T.

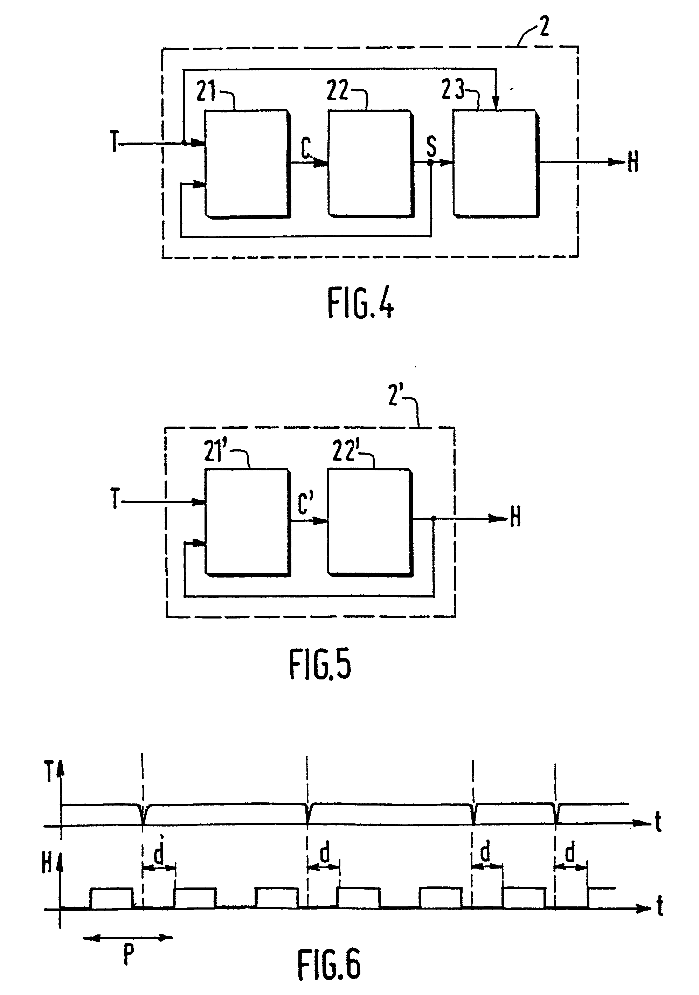

Comme le montre la figure 6, le signal H, en sortie du cicuit 2 de récupération d'horloge, est un signal périodique de période P égale à la durée d'une paire, calé temporellement pour que le décalage temporel $\underline{d}$ entre une impulsion au niveau bas du signal T et le flanc de montée suivant du signal H reste constant, et ici inférieur à la demi-période p/2.

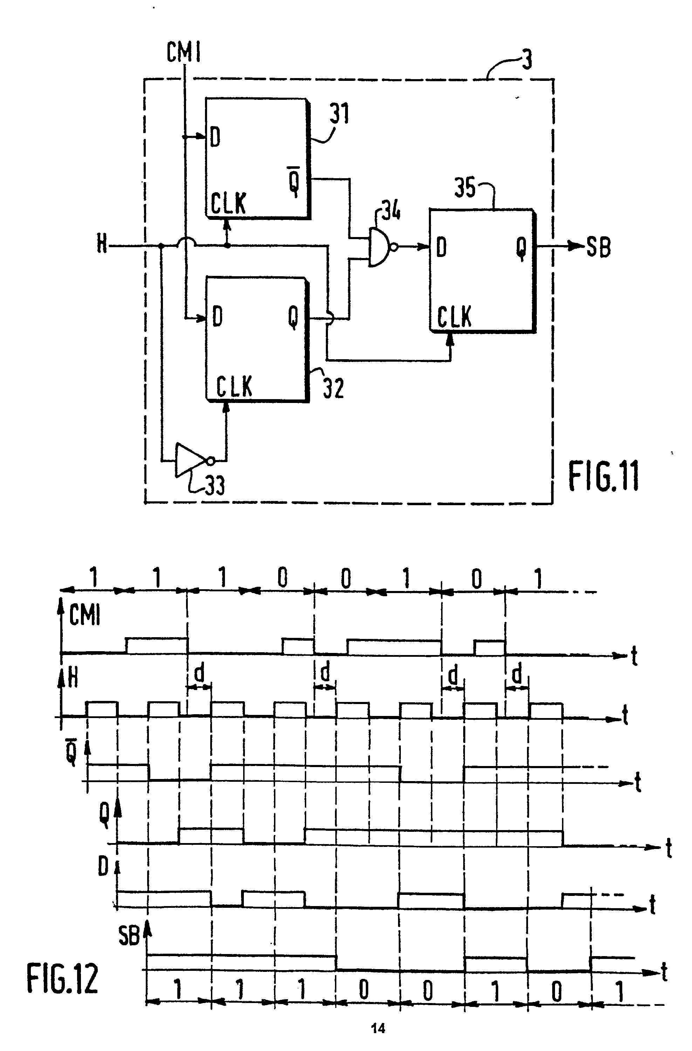

Comme le montre la figure 12, grâce au calage correct du signal H par rapport aux transitions entre paires du signal CMI, le circuit de décodage 3 effectue le décodage des paires du signal CMI, pour délivrer le signal SB, sans ambiguïté et sans erreur.

En référence maintenant à la figure 3, le circuit 1 détecteur de transitions comprend ici un inverseur 11, pourvu d'une entrée recevant le signal CMI et d'une sortie. Une porte $\overline{ET}$ 12 est pourvue d'une première entrée reliée à la sortie de l'inverseur 11, d'une deuxième entrée et d'une sortie délivrant le signal T. Une porte $\overline{ET}$ 14 est pourvue d'une première entrée reliée à la sortie de l'inverseur 11, d'une deuxième entrée et d'une sortie reliée à la deuxième entrée de la porte $\overline{ET}$ 12. Une porte $\overline{ET}$ 13 est pourvue d'une première entrée reliée à la sortie de la porte $\overline{ET}$ 12, d'une deuxième entrée reliée à la sortie de la porte $\overline{ET}$ 14 et d'une sortie reliée à la deuxième entrée de la porte $\overline{ET}$ 14.

Le fonctionnement du circuit 1 détecteur de transitions est le suivant. Lorsque le signal CMI est au niveau haut, le signal en sortie de l'inverseur 11 est au niveau bas, les signaux en sortie des portes $\overline{ET}$ 12 et 14 sont au niveau haut et la sortie de la porte $\overline{ET}$ 13 est au niveau bas. Le signal T est au niveau haut.

Immédiatement après une transition négative du signal CMI, le signal en sortie de l'inverseur 11 passe au niveau haut, la sortie de la porte $\overline{ET}$ 12 passe au niveau bas. Mais cette situation ne dure pas car la sortie de la porte $\overline{ET}$ 13 passe au niveau haut, puis la sortie de la porte $\overline{ET}$ 14 passe au niveau bas, ce qui fait revenir la sortie de la porte $\overline{ET}$ 12 au niveau haut. L'état atteint est alors stable. Ainsi, une transition négative du signal CMI se traduit par une impulsion négative, de durée sensiblement égale à deux fois le temps de propagation dans une porte, sur le signal T.

Lorsque le signal CMI subit une transition positive pour repasser au niveau haut, le signal en sortie de l'inverseur 11 passe au niveau bas. L'état de la sortie de la porte $\overline{ET}$ 12 reste inchangé. Celui de la sortie de la porte $\overline{ET}$ 14 change pour passer à l'état qui a déjà été décrit. Donc, une transition positive du signal CMI est sans influence sur le signal T, dont l'allure est bien celle représentée sur la figure 2.

En référence maintenant à la figure 4, le circuit 2 de récupération d'horloge comprend un comparateur de décalage temporel 21, un oscillateur commandable 22 et un diviseur de fréquence 23.

Le comparateur de calage temporel 21 est pourvu d'une première entrée recevant le signal T, d'une deuxième entrée, et d'une sortie délivrant un signal C.

L'oscillateur commandable 22 est pourvu d'une entrée de commande recevant le signal C et d'une sortie délivrant un signal S, reliée à la deuxième entrée du comparateur de calage temporel 21.

Le diviseur de fréquence 23 est pourvu d'une entrée recevant le signal S et d'une sortie délivrant le signal H, dont la fréquence est égale, ici, à la moitié de la fréquence du signal S. Le diviseur de fréquence 23 est également pourvu d'une entrée de mise en phase recevant le signal T.

Le fonctionnement du circuit 2 de récupération d'horloge est expliqué maintenant.

L'oscillateur commandable 22 délivre le signal S dont la période, égale à P/2, moitié de la durée d'une paire, est susceptible de varier dans une plage de variation relative ici égale à $\pm 5.10^{-5}$, en fonction de la tension reçue sur son entrée de commande. La conception d'un tel oscillateur commandable est à la portée de l'homme de métier et ne sera pas davantage décrite.

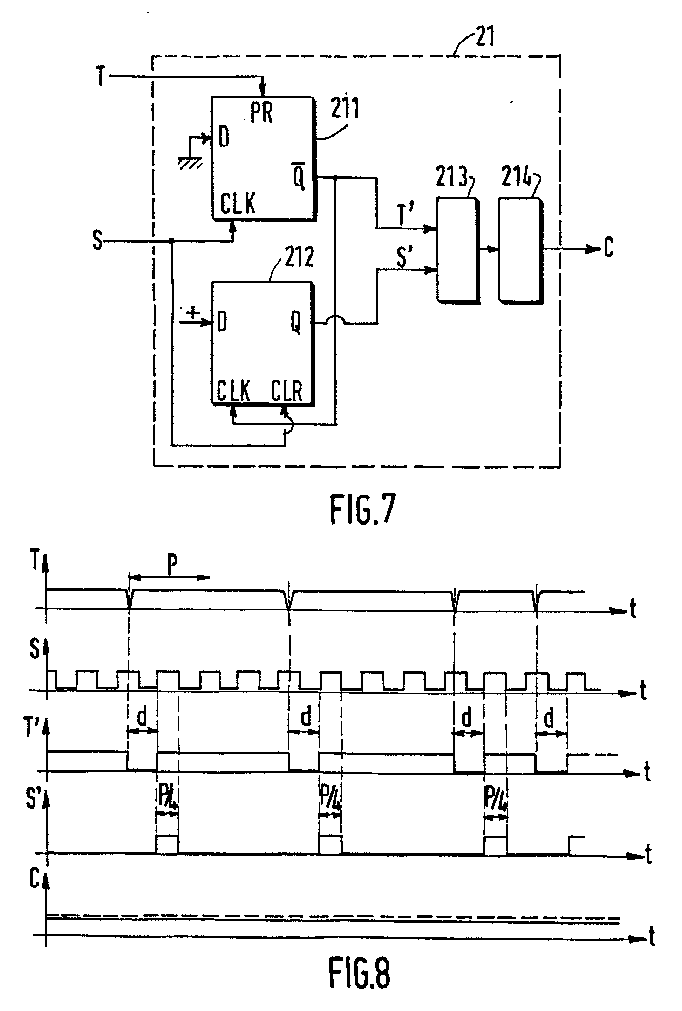

Comme cela sera expliqué dans la suite, et comme cela est montré sur la figure 8, le comparateur de décalage temporel 21 délivre un signal C, dont la tension moyenne, continue, dépend du décalage temporel $\underline{d}$ entre chaque impulsion au niveau bas du signal T, c'est-à-dire une transition entre paires détectée par le circuit 1, et le flanc de montée suivant du signal S en sortie de l'oscillateur.

Le signal C étant appliqué à l'entrée de commande de l'oscillateur commandable 22, une boucle d'asservissement du décalage temporel $\underline{d}$ est constituée, qui assure un parfait synchronisme entre le signal

4

T et le signal S.

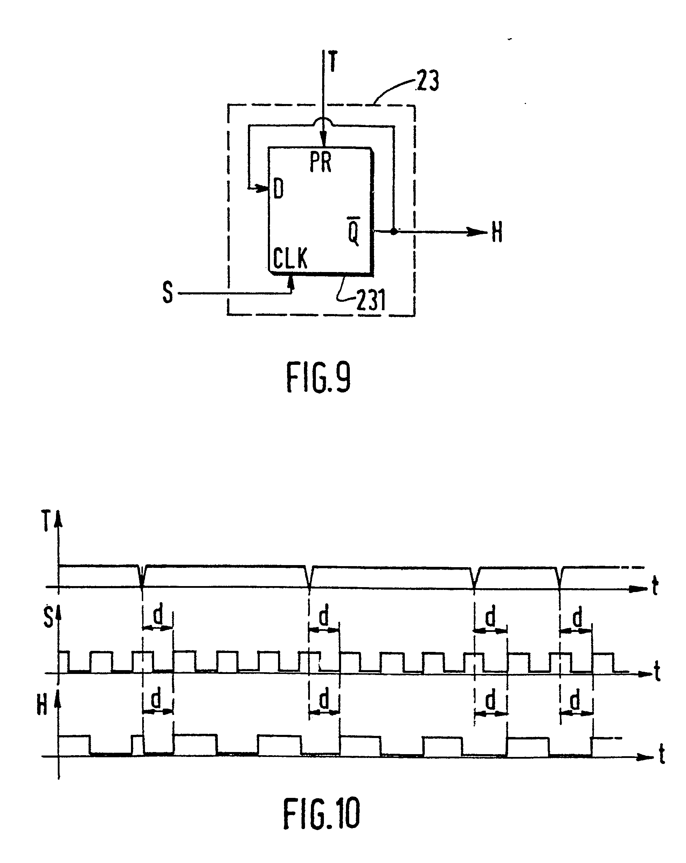

Comme cela sera vu dans la suite, le diviseur de fréquence 23 est agencé pour délivrer un signal H dont la fréquence est la moitié de celle du signal S, et dont la phase est telle que le décalage temporel entre une impulsion au niveau bas du signal T et le flanc de montée suivant du signal H reste égal à $\underline{d}$, donc constant, comme cela est représenté sur la figure 10.

En référence à la figure 7, le comparateur de calage temporel 21 comprend deux bascules D 211 et 212, un additionneur analogique 213 et un filtre passe bas 214.

La bascule 211 est pourvue d'une entrée D reliée à la masse, d'une sortie $\overline{Q}$ délivrant un signal T', d'une entrée de remise à zéro de la sortie $\overline{Q}$, recevant le signal T, et d'une entrée d'horloge recevant le signal S.

La bascule 212 est pourvue d'une entrée D reliée à une tension d'alimentation au niveau logique haut, délivrée par un circuit d'alimentation en énergie électrique, non représenté dans un souci de simplicité, qui alimente tous les autres circuits du dispositif, de façon connue. La bascule 212 est de plus pourvue d'une sortie Q délivrant le signal S', d'une entrée de remise à zéro de la sortie Q, recevant le signal S, et d'une entrée d'horloge recevant le signal T'.

L'additionneur analogique 213 est pourvu de deux entrées recevant les signaux T' et S' et d'une sortie reliée à l'entrée dont est pourvu le filtre passe bas 214, qui délivre en sortie le signal C.

Comme cela est représenté sur la figure 8, le signal T' en sortie de la bascule 211 est presque toujours au niveau haut, ou niveau 1, sauf après chaque impulsion négative du signal T, qui provoque une remise à zéro de la sortie $\overline{Q}$. Le signal T' reste alors au niveau bas, ou niveau 0, jusqu'au flanc de montée suivant du signal S appliqué à son entrée d'horloge. Le signal T' est donc au niveau 0 pendant les décalages temporels $\underline{d}$ précédemment définis.

Le signal S' en sortie de la bascule 212 est presque tounours au niveau bas et passe au niveau haut après chaque flanc de montée du signal T' appliquée à son entrée d'horloge, mais il est remis à zéro par le flanc de descente suivant du signal S, appliqué à son entrée de remise à zéro de la sortie Q. Le signal S' est donc au niveau haut pendant chaque demi-période du signal S qui suit le passage au niveau bas du signal T', c'est-à-dire pendant un temps égal à P/4.

Le signal C, qui résulte de l'addition analogique des signaux T' et S' dans l'additionneur 213, et du filtrage du signal résultant dans le filtre passe bas 214 a donc une tension moyenne continue qui dépend du décalage temporel $\underline{d}$. En effet, compte tenu de la plage de variation relative de la fréquence de sortie de l'oscillateur 22, on peut considérer ici la période P constante. Alors, en supposant égal à l'unité le gain global de l'additionneur 213 et du filtre 214, la tension du signal C est égale à la valeur définissant le niveau logique haut des bascules 211 et 212 si $\underline{d}$ est égal à P/4. Dans ce cas, en effet, les impulsions positives du signal S' compensent exactement les impulsions au niveau bas du signal T'. Sur la figure 8, on a représenté, au contraire, le cas où $\underline{d}$ est légèrement supérieur à P/4. Alors la valeur continue du signal C est légèrement inférieure à la tension définissant le niveau logique haut, représenté en pointillé.

Naturellement, le réglage du gain global de l'additionneur 213 et du filtre 214, ainsi que l'introduction d'un décalage de tension éventuel, afin de rendre compatible le signal C avec le signal de commande nécessaire pour l'oscillateur 22 est à la portée de l'homme de métier.

En référence à la figure 9, le diviseur de fréquence 23 comprend une bascule D 231. La bascule 231 est pourvue d'une entrée D et d'une sortie $\overline{Q}$, rebouclée sur l'entrée D, et délivrant le signal H. La bascule D est également pourvue d'une entrée d'horloge recevant le signal S et d'une entrée de remise à zéro de la sortie $\overline{Q}$, recevant le signal T.

Le fonctionnement de la bascule 231 en diviseur de fréquence par deux est bien connu de l'homme de métier. Pour lever l'ambiguïté sur la phase du signal H par rapport au signal S, les impulsions au niveau bas du signal T forcent, si cela n'est pas le cas, le signal H à passer au niveau bas. Ceci assure la mise en phase du diviseur 23 pour que les flancs de montée du signal S et du signal H qui suivent immédiatement l'impulsion au niveau bas du signal T coïncident, comme représenté sur la figure 10.

Ainsi, le circuit de récupération d'horloge 2 est bien synchronisé par le circuit 1 de détection de transitions entre paires.

En référence maintenant à la figure 11, le circuit de décodage 3 comprend trois bascules D 31, 32 et 35, une porte $\overline{ET}$ 34 et un inverseur 33.

La bascule 31 est pourvue d'une entrée D recevant le signal CMI, d'une sortie $\overline{Q}$ et une entrée d'horloge recevant le signal H.

La bascule 32 est pourvue d'une entrée D recevant le signal CMI, d'une sortie Q et d'une entrée d'horloge recevant le signal H après inversion dans l'inverseur 33.

La porte $\overline{ET}$ 34 est pourvue d'une première entrée reliée à la sortie $\overline{Q}$ de la bascule 31, d'une deuxième entrée reliée à la sortie Q de la bascule 32, et d'une sortie.

La bascule 35 est pourvue d'une entrée D reliée à la sortie de la porte $\overline{ET}$ 34, d'une sortie Q délivrant le signal SB et d'une entrée d'horloge recevant le signal H.

Le fonctionnement du circuit de décodage 3 est expliqué en référence à la figure 12. Sur cette figure, on a représenté le signal CMI reçu, ainsi que, à la ligne supérieure, le signal à coder qui a servi à le produire.

Grâce à la synchronisation du signal H sur les transitions entre paires détectées par le circuit détecteur 1, les flancs de montée du signal H ont toujours lieu pendant le premier bit d'une paire de bits codés du signal CMI. La sortie $\overline{Q}$ de la bascule 31 recopie donc l'inverse de chaque premier bit.

Pour la même raison, les flancs de montée du signal reçu par la bascule 32 sur son entrée d'horloge ont toujours lieu pendant le deuxième bit d'une paire de bits codés du signal CMI. La sortie Q de la bascule 32 recopie donc chaque deuxième bit.

La sortie de la porte $\overline{ET}$ 34 n'est donc au niveau bas que si le premier bit est au niveau bas et le deuxième au niveau haut, c'est-à-dire si la paire codée est 01. Dans tous les autres cas, la sortie de la porte $\overline{ET}$ 34 est au niveau haut. Or ces autres cas ne peuvent correspondre qu'aux paires 00 et 11 puisque la paire 10 n'est jamais utilisée.

Ainsi la sortie Q de la bascule 35 délivre un signal SB qui correspond bien au signal à coder qui a servi à produire le signal CMI.

On remarquera que le circuit de décodage qui vient d'être décrit est particulièrement simple car, grâce à la synchronisation du signal H, la paire interdite 10 n'a pas à être détectée.

Dans le dispositif qui vient d'être décrit, on utilise un oscillateur 22 suivi d'un diviseur de fréquence par deux 23 pour produire le signal H, la boucle d'asservissement du décalage temporel étant faite à partir du signal de sortie S de l'oscillateur. Cet arrangement présente l'avantage de très bonnes performances de la boucle d'asservissement en ce qui concerne sa plage de capture et sa plage de poursuite. Cet arrangement n'est cependant pas obligatoire, et on peut utiliser un circuit de récupération d'horloge 2' du type représenté sur la figure 5, où le bloc 21' désigne un comparateur de calage temporel du même type que le comparateur 21 et le bloc 22' un oscillateur du même type que l'oscillateur 22, mais de fréquence moitié. Les deux entrées du comparateur 21' reçoivent le signal T et le signal H, et sa sortie délivre un signal C' qui commande l'oscillateur 22' délivrant directement le signal H.

Naturellement, l'invention n'est pas limitée au codage CMI particulier qui a servi de support à la description. En particulier il est à la portée de l'homme de métier de transposer le dispositif au cas où un bit à coder de valeur 0 est codé à l'aide de la paire 10, la paire interdite étant cette fois la paire 01, ou encore aux cas obtenus en intervertissant les valeurs 1 et 0 des bits à coder.


## Revendications

1. Dispositif de décodage, recevant une suite codée de bits (CMI) et délivrant une suite décodée de bits (SB), ladite suite codée (CMI) ayant été obtenue par codage d'une suite de bits à coder en convertissant chaque bit à coder en deux bits successifs, un bit à coder ayant l'une ou l'autre de deux valeurs (0,1) qui sont associées, l'une (0) à une seule (01) des paires (01,10) de bits codés différents, l'autre (1) alternativement à l'une (00) et l'autre (11) des deux paires (00,11) de bits codés identiques, le dispositif de décodage comprenant des moyens (2) de récupération d'horloge, commandés par ladite suite codée (CMI) et délivrant un signal d'horloge (H) de période (P) égale à la durée d'une paire de bits de ladite suite codée (CMI), et des moyens (3) de décodage des paires, recevant ladite suite codée (CMI) et ledit signal d'horloge (H), et délivrant ladite suite décodée (SB), dispositif caractérisé par des moyens (1) agencés pour détecter des transitions uniquement entre les trois paires de ladite suite codée (CMI) et synchroniser ainsi directement lesdits moyens (2) de récupération d'horloge.

2. Dispositif selon la revendication 1, dans lequel lesdites transitions détectées sont identiques à la transition de l'autre (10) desdites paires (01,10) de bits codés différents.

3. Dispositif selon l'une des revendications 1 et 2, dans lequel lesdits moyens (2) de récupération d'horloge comprennent un comparateur (21 ; 21') de décalage temporel, et un oscillateur (22 ; 22') commandable, délivrant un signal de sortie (S ; H), agencés pour former une boucle d'asservissement (21,22 ; 21',22') du décalage temporel ($\underline{d}$) entre chaque dite transition détectée et le flanc de montée suivant dudit signal de sortie (S ; H) dudit oscillateur (22 ; 22').

4. Dispositif selon la revendication 3, dans lequel lesdits moyens (2) de récupération d'horloge comprennent aussi un diviseur de fréquence (23), recevant ledit signal de sortie (S) de l'oscillateur (22) et délivrant ledit signal d'horloge (H), ledit diviseur de fréquence (23) étant mis en phase par lesdits moyens (1) pour détecter les transitions.

5. Dispositif selon la revendication 3, dans lequel ledit signal de sortie de l'oscillateur (22') est ledit signal d'horloge (H).

6. Dispositif selon l'une des revendications 3 à 6, dans lequel ledit comparateur (21) de décalage temporel comprend :

— des premiers moyens (211), reliés auxdits moyens (1) pour détecter les transitions, et audit oscillateur (22), pour engendrer un premier signal (T') à un premier niveau (0) pendant le décalage temporel ($\underline{d}$) entre chaque dite transition détectée et le flanc de montée suivant dudit signal de sortie (S) dudit oscillateur (22), et à un deuxième niveau (1) le reste du temps,

— des deuxièmes moyens (212), reliés auxdits premiers moyens (211) pour engendrer un premier signal (T'), et audit oscillateur (22), pour engendrer un deuxième signal (S') audit deuxième niveau (1) pendant un temps déterminé (P/4) après chaque passage au deuxième niveau (1) dudit premier signal (T'), et audit premier niveau (0) le reste du temps,

— et un additionneur analogique (213) desdits premier (T') et deuxième (S') signaux, suivi d'un filtre passe-bas (214).

7. Dispositif selon la revendication 4 dans lequel ledit diviseur de fréquence (23) est un diviseur par deux.

8 Dispositif selon l'une des revendications 1 à 7, dans lequel lesdits moyens (3) de décodage des paires comprennent des moyens (34) pour décoder ladite seule paire (01) utilisée desdites paires (01,10) de bits codés différents.

9. Dispositif selon la revendication 8, dans lequel lesdits moyens pour décoder ladite seule paire (01) utilisée comprennent des moyens de détection (31) de chaque premier bit d'une paire codée de ladite suite codée (CMI), des moyens de détection (32) de chaque deuxième bit d'une paire codée de ladite suite codée (CMI) et une porte logique (34) reliée auxdits moyens de détection (31) de chaque premier bit et auxdits moyens de détection (32) de chaque deuxième bit.

## Ansprüche

1. Anordnung zur Dekodierung, die eine kodierte Folge von Bits (CMI) empfängt und eine dekodierte Folge von Bits (SB) liefert, wobei die kodierte Folge (CMI) durch eine derartige Kodierung einer Folge von zu kodierenden Bits erhalten wird, daß jedes zu kodierende Bit in zwei aufeinanderfolgende Bits umgewandelt wird, wobei ein zu kodierendes Bit den einen oder anderen von zwei Werten (0,1) hat und wobei der eine Wert (0) einem einzigen (01) der Paare (01,10) von verschiedenen kodierten Bits und der andere Wert (1) abwechselnd dem einen (00) und dem anderen (11) der zwei Paare (00,11) von identischen kodierten Bits zugeordnet ist, wobei die Anordnung zur Dekodierung von der genannten kodierten Folge (CMI) gesteuerte Mittel (2) zur Taktwiedergewinnung aufweist und ein Taktsignal (H) von gleicher Periode (P) wie die Dauer eines Bitpaares der genannten kodierten Folge (CMI) erzeugt, sowie Mittel (3) zur Dekodierung der Paare, welche die kodierte Folge (CMI) und das genannte Taktsignal (H) empfangen und die dekodierte Folge (SB) erzeugen, gekennzeichnet durch Mittel (1), die eingerichtet sind, um Übergänge einzig zwischen den drei Paaren der kodierten Folge (CMI) zu erkennen und um so direkt die Mittel (2) zur Taktwiedergewinnung zu synchronisieren.

2. Anordnung nach Anspruch 1, in welcher die genannten erkannten Übergänge identisch sind mit dem Übergang des anderen (10) der genannten Paare (01,10) von verschiedenen kodierten Bits.

3. Anordnung nach einem der Ansprüche 1 und 2, in welcher die genannten Mittel (2) zur Taktwiedergewinnung einen die zeitliche Verschiebung erfassenden Vergleicher (21 ; 21') und einen ein Ausgangssignal (S ; H) erzeugenden steuerbaren Oszillator (22 ; 22') umfassen, und die so angeordnet sind, daß sie eine Rückkopplungsschleife (21,22 ; 21',22') für die zeitliche Verschiebung ($\underline{d}$) zwischen jedem erkannten Übergang und der folgenden Anstiegsflanke des Ausgangssignals (S ; H) des Oszillators (22 ; 22') bilden.

4. Anordnung nach Anspruch 3, in welcher die Mittel (2) zur Taktwiedergewinnung auch einen Frequenzteiler (23) umfassen, der das Ausgangssignal (S) des Oszillators (22) empfängt und das Taktsignal (H) liefert, wobei der Frequenzteiler (23) durch die die Übergänge erkennenden Mittel (1) phasengleich gestellt wird.

5. Anordnung nach Anspruch 3, in welcher das Ausgangssignal des Oszillators (22') das Taktsignal (H) ist.

6. Anordnung nach einem der Ansprüche 3 bis 6, in welcher der die zeitliche Verschiebung erfassende Vergleicher (21) umfaßt :

— erste an die die Übergänge erkennenden Mittel (1) und an den Oszillator (22) angeschlossene erste Mittel (211) zur Erzeugung eines ersten Signals (T'), das während der zeitlichen Verschiebung ($\underline{d}$) zwischen jedem erkannten Übergang und der folgenden Anstiegsflanke des Ausgangssignals (S) des Oszillators (22) auf einem ersten Niveau (0) und während der übrigen Zeit auf einem zweiten Niveau

7

(1) liegt,

– an die ersten Mittel (211) zur Erzeugung eines ersten Signals (T') und an den Oszillator (22) angeschlossene zweite Mittel (212) zur Erzeugung eines zweiten Signals (S'), das während einer bestimmten Zeit (P/4) nach jedem Übergang in das zweite Niveau (1) des genannten ersten Signals (T') auf das zweite Niveau (1) auf diesem zweiten Niveau (1) und die übrige Zeit auf dem ersten Niveau (0) liegt

– und eine analoge Summierschaltung (213) zur Addition des ersten (T') und zweiten Signals (S'), der ein Tiefpaßfilter (214) nachgeschaltet ist.

7. Anordnung nach Anspruch 4, in welcher durch den Frequenzteiler (23) eine Teilung durch 2 erfolgt.

8. Anordnung nach einem der Ansprüche 1 bis 7 in welcher die Mittel (3) zur Dekodierung der Paare Mittel (34) umfassen, um das einzige verwendete Paar (01) der Paare (01,10) verschieden kodierter Bits zu dekodieren.

9. Anordnung nach Anspruch 8, in welcher die Mittel zur Dekodierung des einzigen verwendeten Paares (01) Mittel (31) zur Erkennung jedes ersten Bits eines kodierten Paares der kodierten Folge (CMI), Mittel zur Erkennung (32) jedes zweiten Bits eines kodierten Paares der kodierten Folge (CMI) und ein an die Mittel zur Erkennung (31) jedes ersten Bits und an die Mittel zur Erkennung (32) jedes zweiten Bits angeschlossenes logisches Tor (34) umfassen.

## Claims

1. Decoding device, receiving a coded succession of bits (CMI) and delivering a decoded succession of bits (SB), said coded succession (CMI) being obtained by coding a succession of bits to be coded by converting each bit to be coded into two successive bits, a bit to be coded having one or other of two values (0,1) which are associated, one (0) with a single one (01) of the pairs (01,10) of different coded bits, the other (1) alternately with one (00) and other (11) of the two pairs (00,11) of identical coded bits, the decoding device comprising clock recovery means (2), controlled by said coded succession (CMI) and delivering a clock signal (H) of a period (P) equal to the duration of a pair of bits of said coded succession (CMI), and means (3) for decoding the pairs, receiving said coded succession (CMI) and said clock signal (H) and delivering said decoded succession (SB), device characterized in means (1) adapted for detecting transitions only between the three pairs of said coded succession (CMI) and thus directly synchronizing said clock recovery means (2).

2. Device according to claim 1, wherein said detected transitions are identical to the transition of the other (10) one of said pairs (01,10) of different coded bits.

3. Device according to one of claims 1 and 2, wherein said clock recovery means (2) comprise a time shift comparator (21 ; 21') and a controllable oscillator (22 ; 22') delivering an output signal (S ; H), adapted so as to form a loop (21,22 ; 21',22') controlling the time shift (d) between each said detected transition and the next rising front of said output signal (S ; H) of said oscillator (22 ; 22').

4. Device according to claim 3, wherein said clock recovery means (2) also comprise a frequency devider (23) receiving said output signal (S) from the oscillator (22) and delivering said clock signal (H), said frequency divider (23) being phased by said means (1) for detecting the transitions.

5. Device according to claim 3, wherein said output signal of the oscillator (22') is said clock signal (4).

6. Device according to one of claims 3 to 6, wherein said time shift comparator (21) comprises :

– first means (211) connected to said means (1) for detecting the transitions and to said oscillator (22) for generating a first signal (T') at a first level (0) during the time shift (d) between each said detected transition and the next rising front of said output signal (S) of said oscillator (22), and at a second level (1) for the rest of the time,

– second means (212) connected to said first means (211) for generating a first signal (T') and to said oscillator (22) for generating a second signal (S') at said second level (1) during a given time (P14) after each passage to the second level (1) of said first signal (T'), and at said first level (0) for the rest of the time,

– and an analog adder (213) for adding said first (T') and second (S') signals, followed by a low pass filter (214).

7. Device according to claim 4, wherein said frequency divider (23) is a divide by two divider.

8. Device according to one of claims 1 to 7, wherein said means (3) for decoding the pairs comprise means (34) for decoding said single pair (01) used of said pairs (01,10) of different coded bits.

9. Device according to claim 8, wherein said means for decoding said single pair (01) used comprise means (31) for detecting each first bit of a coded pair of said coded succession (CMI), means (32) for detecting each second bit of a coded pair of said coded succession (CMI) and a logic gate (34) connected to said means (31) for detecting each first bit and to said means (32) for detecting each second bit.

FIG.1

FIG.2

FIG.3

FIG.4

FIG.5

FIG.6

FIG.7

FIG.8

FIG.9

FIG.10

CMI

D 31

Q̄

CLK

34

35

H

D Q → SB

D Q

CLK

CLK

32

33

**FIG.11**

1    1    1    0    0    1    0    1

CMI

t

H

d        d         d    d

t

Q̄

t

Q

t

D

t

SB

**FIG.12**

t

1    1    1    0    0    1    0    1